# EUROPEAN PATENT APPLICATION

(11) **EP 2 138 295 A1**
(43) Date of publication of application: **30.12.2009**
(21) Application number: 09163107.7
(22) Date of filing: 18.06.2009
(51) Int. Cl.: B29C 45/30

(54) **Device at torpedo points for a hot ingot for plastic**

(30) Priority: 26.06.2008 SE 0801516
(71) Applicant: Müller, Hans, 506 70 Frufällan (SE)
(72) Inventor: Müller, Hans, 506 70 Frufällan (SE)
(74) Representative: Cederbom, Hans Erik August

(57) **Abstract**

The present invention relates to a device (1) at a hot ingot (2) for plastic (3) and comprises a number of torpedo points (4) that are displaceably actuatable by adjustment in essentially the radial direction (5) from the rear portion (6) of the hot ingot by means of a number of actuation shafts (7) extending axially in the hot ingot (2) as well as having co-operating oblique grooves (8, 9).

According to the invention, the respective actuation shaft (7) is divided in the longitudinal direction thereof into an unturnable part (20) and into a turnable rear part (21), respectively. The respective torpedo point (4) is actuatable by means of an axially movable and unturnably mounted front actuation shaft part (22) associated with the respective torpedo point, the displacement of said respective unturnable part (20) being arranged to show the radial positions of the appurtenant respective torpedo point (4).

## Description

The present invention relates to a device at a hot ingot for plastic and comprising a number of torpedo points that are displaceably actuatable by adjustment in essentially the radial direction from the rear portion of the hot ingot by means of a number of actuation shafts extending axially in the hot ingot as well as having co-operating oblique grooves.

It is important to easily be able to withdraw a hot ingot having a hot-runner nozzle and that has torpedo points that are projectable and retractable and adjustable after the nozzle is built-in in the tool or the mould utilized. In that connection, it has to be easy to see if the torpedo points are in the correct position, i.e., insertable into the hot ingot or projectable in the respective adjustable desired radial position in the mould/tool the hot ingot is employed. It is also desired to provide a hot ingot wherein the different parts can be mounted and dismounted, respectively, in the moulding tool without needing to utilize loose or split mould inserts so that a plurality of nozzles should be possible to be mounted beside each other and at shorter centre distance than previous cases and more economically.

Therefore, the main object of the present invention is primarily to solve, among other things, the problems mentioned above in a simple and efficient way.

Said object is attained by means of a device according to the present invention, which essentially is **characterized in that** the respective actuation shaft is divided in the longitudinal direction thereof into an unturnable part and into a turnable rear part, respectively, that the respective torpedo point is actuatable by means of an axially movable and unturnably mounted front actuation shaft part associated with the respective torpedo point, the displacement of said respective unturnable part being arranged to show the radial positions of the appurtenant respective torpedo point.

The invention is described below in the form of a preferred embodiment, reference being made to the accompanying drawings, in which,

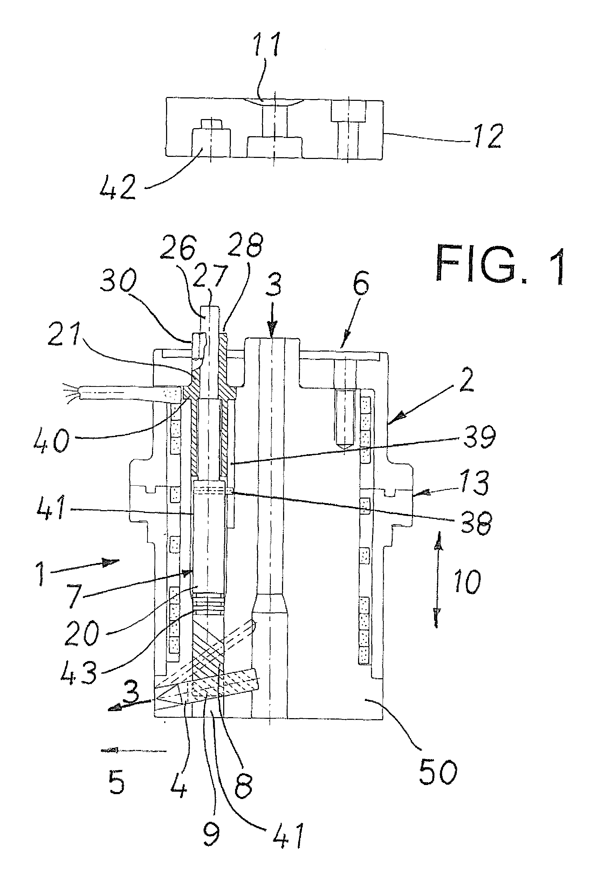

Fig. 1 shows an exploded view and longitudinally a hot-runner nozzle for a hot ingot for plastic material,

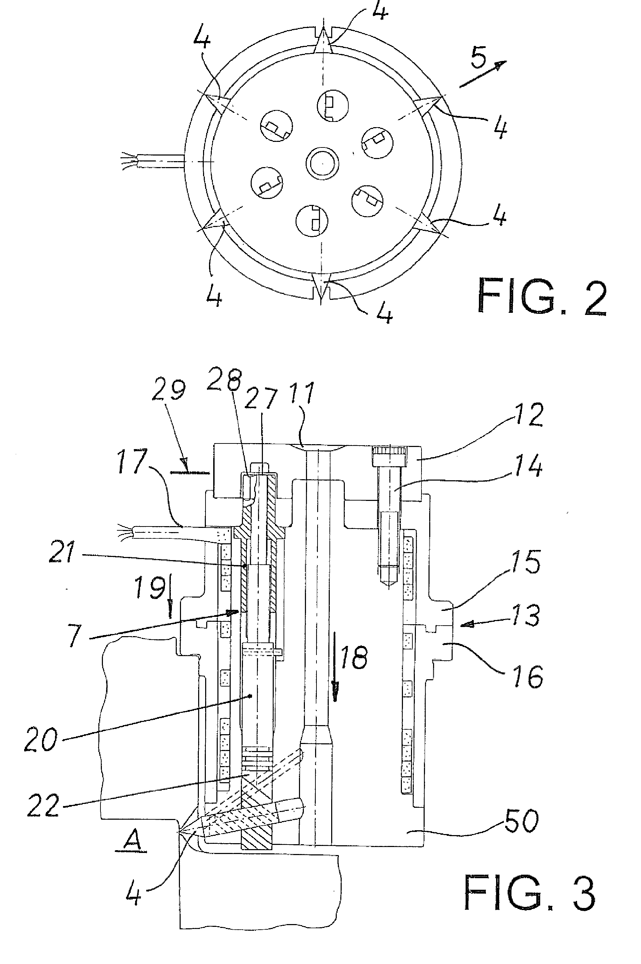

Fig. 2 shows an end view of a said hot-runner nozzle having shown points in projected operation position,
Fig. 3 shows a section view along the length extension of the hot-runner nozzle,

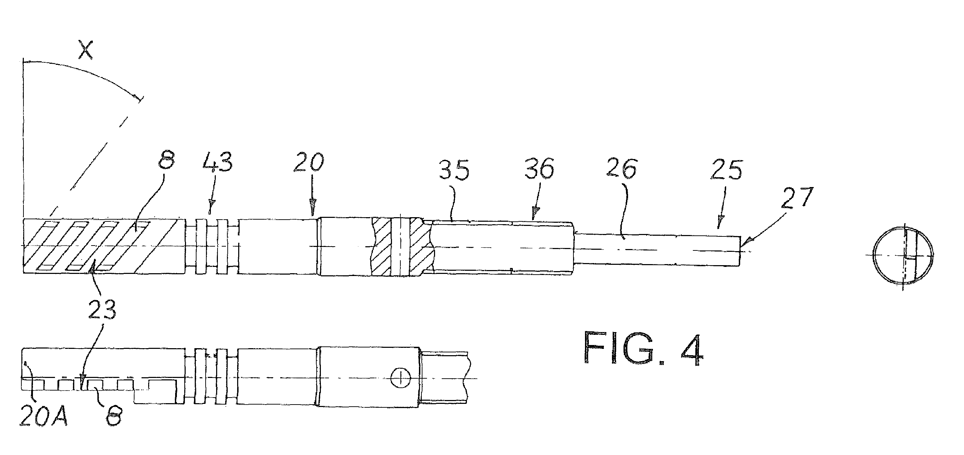

Fig. 4 shows an actuation shaft part as seen from different directions, and

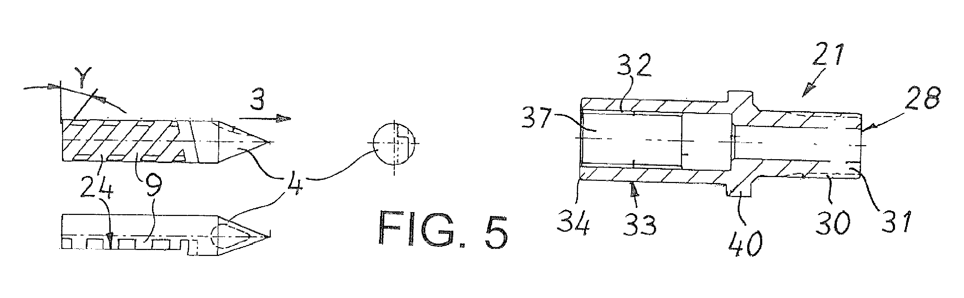

Fig. 5 shows torpedo points as seen from different directions as well as a turnable actuation part shown in longitudinal section.

The nozzle has movable torpedo points that are insertable and adjustable after the nozzle is built-in in the mould/tool. The torpedo point does not have to be locked when the correct position is achieved. By a multi-teeth system having tilted grooves in both the axial draw piston and the torpedo point, the same can be moved to the desired position. Before the nozzle is dismounted, in this way the torpedo point can be withdrawn into the body of the nozzle and after that the nozzle can easily be dismounted. There are an internally threaded sleeve having a key grip in one end and an external flange that is rotated by means of a key, so that the axial motion of the draw piston moves the torpedo point in the radial direction. A locking pin running in a groove holds the draw piston in the correct position. A number of special seals guarantee tightness. When the upperside of the draw piston is lying axially with the sleeve, the torpedo point has got into the correct operation position. When the draw piston is pulled up a predetermined measure, it is ascertained that the torpedo point is withdrawn and the nozzle can be dismounted. The fundamental construction of the nozzle is so that the heater elements can be replaced while the nozzle still is built-in in the tool.

Replacement of element while the nozzle is built-in.
* Lift off the cover plate and hood,
* Pull up the element while the element is opened by a slight counter-clockwise turning,
* Mount the new element by screwing carefully clockwise (temporary mounting),
* Heat the nozzle and withdraw the torpedo point/points,
* Dismount the nozzle to mount the new element correctly.

The hot-runner nozzle can be mounted and dismounted in the moulding tool without using loose or split mould inserts. This means that a plurality of nozzles beside each other can be mounted at a shorter centre distance, and the total tool dimensions and manufacturing cost for the tool are essentially reduced.

The torpedo point and the draw piston are coated parts, in order to guarantee mobility and prevent the material from getting burnt and stuck in the nozzle. Torpedo points may also be provided in cemented carbide for increased wear resistance.

More precisely, the invention relates to a device 1 at a hot ingot 2 for injecting hot plastic 3 and comprises a number of torpedo points 4 that are displaceably actuatable by adjustment in essentially the radial direction 5 from the rear portion 6 of the hot ingot by means of a number of actuation shafts 7 extending axially 10 in the hot ingot 2 as well as having co-operating oblique grooves 8, 9. Plasticized hot plastic 3 is arranged to be supplied from the rear portion 6 of the hot ingot via a connecting part 11 of a top lid 12 that is arranged to be bolted on the central body 13 of the hot ingot 2 by means of a number of screws 14 in a known way.

Said body 13 is in two parts, the two hot ingot halves 15, 16 containing a helical electrical heating element 17 of, e.g., cupper material or steel wound around the central middle body 50 of said hot ingot 2.

Suitably, said torpedo points 4 are arranged in said hot ingot 2 so that they lean somewhat obliquely forward as seen in the intended injection direction 18 of the plastic and uniformly distributed along the circumference of said hot ingot.

According to the invention, the respective actuation shaft 7 is divided in the longitudinal direction thereof 19, *viz*. into an unturnable part 20 a turnable rear shaft part 21, respectively. The respective torpedo point 4 is, in that connection, arranged actuatable by means of an axially movable and unturnably mounted front actuation shaft part 22 associated with the respective torpedo point 4. In that connection, the displacement of the respective unturnable part 20 is arranged to show the radial positions of the appurtenant respective torpedo point 4.

Displacement of the torpedo points 4 in the longitudinal direction thereof and in essentially the radial direction is enabled by the fact that said respective unturnable shaft part 20 is formed of, at the front end 20A thereof, a plane engagement part 23 provided with tilted straight grooves 8 and that the respective torpedo point has the corresponding tilted straight grooves 9 along a plane engagement part 24. The angle x, y of said grooves 8, 9 is approx. 38-40° and said grooves 8, 9 are straight so that said points 4 are arranged to be actuated to move in the axial length extension 3 of the points.

At the rear end 25 thereof, said unturnable shaft part 20 has an axially movable upright 26 receivable in the turnable rear shaft part 21.

Said two shaft parts 20, 21 are dimensionally adapted so that the correctly adjusted operation position A of the appurtenant actuatable torpedo point 4 is arranged to be shown when said two outer end surfaces 27, 28 of the shaft parts 20, 21 or other predetermined locations on the two shaft parts 20, 21 are lying essentially in a common plane 29 or are in another suitable way situated right opposite each other, which however is not shown in the drawings.

The rear turnable shaft part 21 has a nut-like key portion 30 at the rear outer end 31 thereof and an internally threaded 32 sleeve-shaped portion 33 in the interior thereof at the front end 34 thereof.

A correspondingly threaded 35 portion 36 is arranged to be received and co-operate internally 37 in the internal said threaded portion 33 of the front shaft part 21.

Guiding of the unturnable shaft part 20 is arranged to be providable by means of a projecting pin 38 and axially running groove 39 mutually co-operating between said internal shaft 20 and said hot ingot 2.

The turnable shaft part 21 has an external flange 40, which besides forming guiding upon receipt of the entire shaft 7 internally in mating axial recess 41 in the hot ingot 2 also forms delimitation between internally threaded said portion 33 and the external key portion 30.

A said lid 12 is provided with a corresponding number of recesses 42 mating said rear turnable parts 21 and arranged distributed internally in said lid 12 boltable to the hot ingot 2.

Efficient sealing of said actuation shafts 7 is provided by a seal 43 being arranged in the area behind said grooves 8, 9 for the torpedo points 4 to prevent softened plastic 3 from penetrating into the space 41, which is intended for mounting of the unturnable actuation part 20. The function and the nature of said device 1 and the parts included in the hot ingot 2 should have been understood by what has been mentioned above and by means of the accompanying drawings.

Naturally, the invention is not limited to the embodiments described above and shown in the accompanying drawings. Modifications are feasible, particularly as for the nature of the different parts, or by using an equivalent technology, without departing from the protection area of the invention, such as it is defined in the claims.

## Claims

1. Device (1) at a hot ingot (2) for plastic (3) and comprising a number of torpedo points (4) that are displaceably actuatable by adjustment in essentially the radial direction (5) from the rear portion (6) of the hot ingot by means of a number of actuation shafts (7) extending axially in the hot ingot (2) as well as having co-operating oblique grooves (8, 9), **characterized in that** the respective actuation shaft (7) is divided in the longitudinal direction thereof into an unturnable front part (20) and into a turnable rear part (21), respectively, that said unturnable shaft part (20) is formed of, at the front end (20A) thereof, a plane engagement part (23) provided with tilted straight grooves (8) and, at the rear end (25) thereof, an axially movable upright (26) receivable in the turnable rear shaft part (21), that the respective torpedo point (4), which has the corresponding tilted straight grooves (9) along a plane engagement part (24), is actuatable by means of an axially movable and unturnably mounted front actuation shaft part (22) associated with the respective torpedo point, the displacement of said respective unturnable part (20) is arranged to show the radial positions of the appurtenant respective torpedo point (4), and that said two shaft parts (20, 21) are dimensionally adapted so that the correctly adjusted operation position (A) of the appurtenant actuatable torpedo point (4) is arranged to be shown when the outer end surfaces (27, 28) of said two shaft parts (20, 21) are lying essentially in a common plane (29).

2. Device according to claim 1, **characterized in that** the rear turnable shaft part (21) has a nut-like key portion (30) at the outer end (31) thereof and an internally threaded (32) sleeve-shaped portion (33) in the interior thereof at the front end (34) thereof.

3. Device according to claim 2, **characterized in that** an externally threaded (35) portion (36) is arranged to be received internally (37) in the internal said threaded portion (33) of the front shaft part (20).

4. Device according to any one of claims 2-3, **characterized in that** guiding of the unturnable shaft part (20) is arranged to be provided by means of a projecting pin (38) and axial groove (39) mutually co-operating between said internal shaft part (20) and said hot ingot (2).

5. Device according to any one of the preceding claims, **characterized in that** the turnable shaft part (21) has an external flange (40) as delimitation between the internally threaded portion (33) and the external key portion (30).

6. Device according to claim 5, **characterized in that** there is a lid (12) having a corresponding number of recesses (42) mating said rear turnable parts (21) and arranged distributed internally in said lid (12) boltable to the hot ingot (2).

7. Device according to any one of the preceding claims, **characterized in that** the angle (x, y) of said grooves (8, 9) is approx. 38-40°.

8. Device according to claim 7, **characterized in that** the grooves (8, 9) are straight so that said points (4) are arranged to be actuated to move in the axial length extension (3) of the points.
